# FASCICULE DE BREVET EUROPEEN

(11) **EP 2 129 570 B1**
(45) Date de publication et mention de la délivrance du brevet: **04.05.2011**
(21) Numéro de dépôt: 08775663.1
(22) Date de dépôt: 03.03.2008
(51) Int. Cl.: B62D 65/00, B62D 65/02, B62D 65/18

(54) **UNITÉ DE MISE EN CONFORMATION GÉOMÉTRIQUE**
GEOMETRISCHE KONFORMATIONSEINHEIT
GEOMETRICAL CONFORMATION UNIT

(30) Priorité: 30.03.2007 FR 0754179
(43) Date de publication de la demande: 09.12.2009
(73) Titulaire: Peugeot Citroën Automobiles SA, 78140 Vélizy-Villacoublay (FR)
(72) Inventeur: MARTINAIS, Bruno, F-35310 Cintre (FR)
(74) Mandataire: Allain, Laurent
(86) Numéro de dépôt international: PCT/FR2008/050360
(87) Numéro de publication internationale: WO 2008/122740

(56) Documents cités:
- EP-A- 1 430 989
- BE-A1- 889 006
- JP-A- 60 135 381
- US-A- 4 827 598
- US-A- 5 027 502

## Description

La présente invention concerne une unité de mise en conformation géométrique d'une caisse d'un véhicule automobile.

Une caisse de véhicule comprend généralement un soubassement, deux côtés de caisse, un panneau arrière, une tablette arrière et des traverses. Sur la ligne de production du véhicule, l'ensemble de ces éléments est pré-assemblé au niveau d'un poste de pré-assemblage à l'aide d'agrafes. La caisse ainsi pré-assemblée passe ensuite sur un poste de soudage où pour la conformer en géométrie, une unité de mise en conformation maintient les différents éléments lors du soudage.

Le document US 4827598 décrit une unité de mise en conformation géométrique d'un véhicule selon le préamble de la revendication 1. Le document EP-B-1 084 055 divulgue un exemple d'une unité de mise en conformation géométrique comprenant, d'une part, un bâti sur lequel se positionne un chariot portant la caisse pré-assemblée et, d'autre part, une pluralité de conformateurs. L'ensemble de conformateurs comprend un conformateur arrière qui porte le panneau arrière, deux conformateurs latéraux qui portent chacun un côté de la caisse et un conformateur supérieur qui porte le panneau de toit et les traverses. Chaque conformateur comprend des moyens de préhension et de manipulation pour un robot et des pinces pour y fixer la partie de la caisse considérée. Chaque conformateur est amené sur le bâti par un robot et y est fixé. Une fois que les différents conformateurs sont positionnés, l'ensemble forme une coque à l'intérieur de laquelle se trouve la caisse qui doit être soudée. L'encombrement d'une telle unité ne facilite pas l'accès des robots de soudage à l'intérieur.de la coque.

L'invention a pour but de remédier aux inconvénients mentionnés ci-dessus en proposant une unité de mise en conformation géométrique qui soit plus facile à mettre en oeuvre.

A cet effet, la présente invention concerne une unité de mise en conformation géométrique d'un véhicule comprenant :
- un bâti prévu pour recevoir la caisse du véhicule,
- deux paires de conformateurs prévues pour se fixer sur le bâti symétriquement par rapport au plan de symétrie du véhicule, chaque conformateur comprenant des moyens de maintien prévus pour maintenir la partie de la caisse en vis-à-vis de laquelle ledit conformateur est fixé, chaque paire de conformateurs comprenant un conformateur avant maintenant la partie avant de la caisse et un conformateur arrière maintenant la partie arrière de la caisse.

Chaque conformateur comprend une première partie qui s'étend verticalement à partir du bâti et une deuxième partie qui s'étend horizontalement au-dessus de la caisse depuis la première partie et en direction du plan de symétrie.

De préférence, l'unité de mise en conformation géométrique comprend des moyens de verrouillage prévus pour verrouiller entre elles les deuxièmes parties des conformateurs avant, des moyens de verrouillage prévus pour verrouiller entre elles les deuxièmes parties des conformateurs arrières et/ou des moyens de verrouillage prévus pour verrouiller les conformateurs sur le bâti.

Avantageusement, les conformateurs arrières sont conçus pour laisser libre l'accès à l'arrière de la caisse.

Selon un mode de réalisation préféré, chaque conformateur comprend des changeurs d'outil automatiques aptes à faciliter la préhension de ce conformateur par un robot de manutention.

L'invention sera mieux comprise, et d'autres buts, caractéristiques, détails et avantages de celle-ci apparaîtront plus clairement au cours de la description explicative qui va suivre faite en référence au dessin schématique annexé donné uniquement à titre d'exemple illustrant un mode de réalisation de l'invention et dans lequel est représentée une unité de mise en conformation géométrique selon l'invention.

Une unité de mise en conformation géométrique 1 selon l'invention est montrée sur la figure unique.

Sur une chaîne d'assemblage d'un véhicule, la caisse 5 du véhicule passe par une étape de pré-assemblage où les différents éléments la constituant sont pré-positionnés et maintenus par agrafage.

Cette caisse est positionnée sur un plateau de transport, nommé luge avec laquelle elle se déplace de station en station. Lorsque la caisse arrive sur une station, il existe deux possibilités pour la positionner :
- soit on positionne la luge par l'intermédiaire de bridages et pilotes. On parle alors de multigéométrie car chaque véhicule est positionné sur une luge différente à cause des tolérances de fabrication de cette luge,
- soit on dépose la caisse sur des pilotes et des bridages en la désolidarisant de sa luge par l'intermédiaire d'une table élévatrice. On parle alors de monogéométrie car chaque caisse est positionnée dans la station sur une géométrie unique.

Dans l'exemple de l'invention, le bâti prévu pour recevoir la caisse du véhicule est équipé d'une monogéométrie.

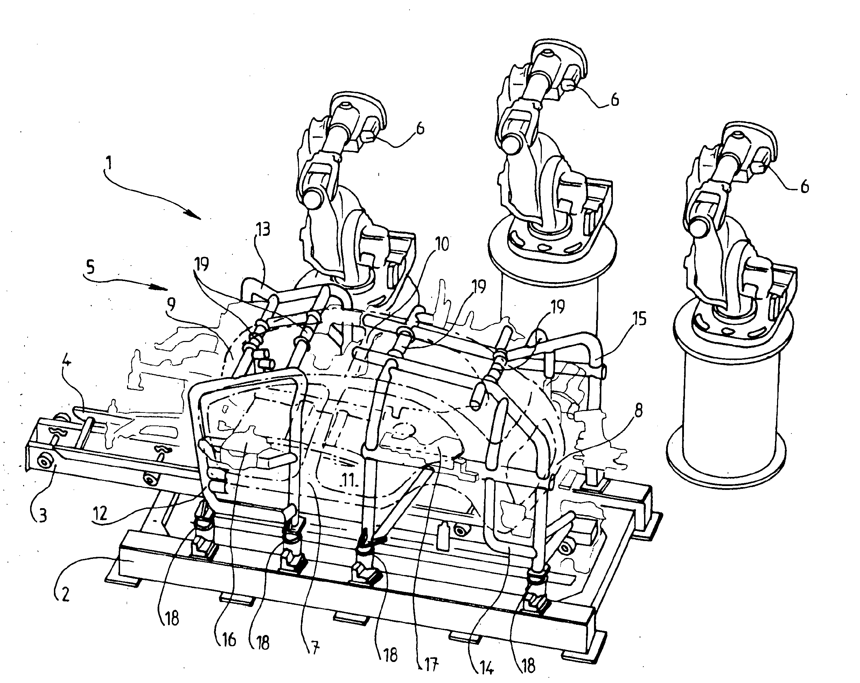

La caisse 5 représentée sur la figure 1 comprend un soubassement 11, deux côtés de caisse 7 et 9, un panneau arrière 8, une tablette arrière et des traverses 10.

La caisse 5 passe alors à un poste de soudage comprenant au moins un robot de soudage 6 par l'intermédiaire d'un chariot 4 qui est déplacé par des moyens de manutention 3, qui peuvent prendre la forme d'une table à rouleaux, d'un TMT (Transfert Modulable à Tube), d'un chariot automoteur ou autres.

L'unité de mise en conformation géométrique 1 se situe au niveau du poste de soudage et comprend un bâti 2 qui sert de référence géométrique et qui reçoit la caisse 5 par l'intermédiaire du chariot 4 qui s'arrête de manière précise sur ledit bâti 2.

Avant que les robots de soudage 6 entrent en action et soudent les différents éléments constituant la caisse 5, ils positionnent des conformateurs 12, 13, 14 et 15 de l'unité 1 sur le bâti 2.

Les conformateurs 12, 13, 14 et 15 sont au nombre de quatre et sont divisés en deux paires de conformateurs (12, 14) et (13, 15).

Chaque paire de conformateurs (12, 14), (13, 15) est disposée d'un côté du plan de symétrie longitudinal du véhicule.

Ainsi, les deux paires de conformateurs (12, 14) et (13, 15) sont prévues pour se fixer sur le bâti 2 symétriquement par rapport au plan de symétrie du véhicule.

Lorsque les conformateurs sont verrouillés, ils créent une coque rigide et référencée géométriquement par rapport au bâti 2 et à l'intérieur de laquelle, la caisse 5 est maintenue pendant le soudage.

Chaque conformateur est, ici, constitué d'une ossature de tubes allégeant le poids de la coque qu'ils forment une fois assemblés les uns aux autres.

Afin de maintenir la/les partie(s) de la caisse 5 en vis-à-vis de laquelle ou desquelles il est fixé, chaque conformateur 12, 13, 14, 15 comprend des moyens de maintien par exemple, du type pinces, qui viennent se fixer sur la/les partie(s) correspondante(s) de la caisse 5.

Chaque paire de conformateurs (12, 14), (13, 15) comprend un conformateur avant 12, 13 prévu pour maintenir la partie avant de la caisse 5 et un conformateur arrière 14, 15 prévu pour maintenir la partie arrière de la caisse 5.

Une telle unité 1 est plus facile à mettre en oeuvre et la séparation en quatre conformateurs permet de libérer de l'espace qui permet une pénétration plus aisée des pinces de soudage 6 à l'intérieur de la coque.

Afin de faciliter la mise en place de chaque conformateur 12, 13, 14, 15 par un robot de manutention, des changeurs d'outil automatiques sont disposés sur chacun des conformateurs 12, 13, 14 et 15.

Chaque robot de manutention peut alors prendre et positionner un conformateur par les changeurs d'outil automatiques. Pour chaque paire de conformateurs (12, 14), (13, 15), un espace libre est conservé entre le conformateur avant 12, 13 et le conformateur arrière 14, 15.

Chaque conformateur avant 12, 13 s'étend sensiblement sur la longueur de l'ouverture de la porte avant. Dans le cas d'un véhicule à cinq portes, chaque conformateur arrière 14, 15 s'étend sensiblement du milieu de l'ouverture de la porte arrière jusqu'à l'arrière de la caisse 5.

La séparation en deux conformateurs avant 12 et 13 et deux conformateurs arrières 14 et 15 permet, pour une même gamme de véhicule, de réduire les investissements en outillage.

En effet, les conformateurs avant 12 et 13 sont communs à l'ensemble de la gamme. Selon le type (5 portes, 3 portes, break) de véhicule de la gamme qui doit être assemblé, seuls les conformateurs arrières 14 et 15 sont différents.

La structure particulière de l'unité 1 permet un assemblage de tous les éléments constituant la caisse 5 dans un seul poste de conformation.

Chaque conformateur 12, 13, 14, 15 est fixé sur le bâti 2 par l'intermédiaire de moyens de fixation 18, comme par exemple des brides.

L'ensemble des éléments permettant la réalisation de la coque, ainsi que les actionneurs réalisant la géométrie du côté de caisse tels que des actionneurs de serrage, de type presse-flan, porte pilote, des pinces, des brides tournantes, des pilotes multifonction, les moyens de maintien et les moyens de manutention sont embarqués sur les conformateurs 12, 13, 14 et 15.

Ainsi, l'enlèvement des conformateurs après le soudage ne laisse aucun élément sur le bâti 2.

L'espace autour du bâti 2 est alors entièrement dégagé, permettant une amélioration de la flexibilité.

Afin de recouvrir au mieux la caisse 5, et, en particulier, le panneau de toit et les traverses 10, chaque conformateur 12, 13, 14, 15 comprend une première partie qui s'étend verticalement à partir du bâti 2 et une deuxième partie qui s'étend horizontalement au-dessus de la caisse 5 depuis la première partie et en direction du plan de symétrie.

Afin de rigidifier encore la coque, l'unité de mise en conformation géométrique 1 comprend des moyens de verrouillage 19 prévus pour verrouiller entre elles les deuxièmes parties des conformateurs avant 12 et 13 et des moyens de verrouillage 19 prévus pour verrouiller entre-elles les deuxièmes parties des conformateurs arrières 14 et 15. Les moyens de verrouillage 19 peuvent prendre la forme de brides. Un mode de bridage particulièrement approprié est du type ZPS (Zéro Point System, marque commerciale de la société AMF).

Afin de faciliter l'accès à l'arrière de la caisse 5, et, en particulier, au panneau arrière 8 et à la tablette arrière, les conformateurs arrières 14 et 15 sont conçus pour laisser libre l'accès à l'arrière de la caisse 5.

Selon un mode de réalisation particulier, les premières parties des conformateurs arrières 14 et 15 s'étendent uniquement le long des côtés de caisse 7 et 9 dans un plan parallèle au plan de symétrie et les deuxièmes parties des conformateurs arrières 14 et 15 sont orientées en biais depuis l'arrière de la caisse 5 vers l'avant de la caisse 5, formant ainsi, vues du dessus, sensiblement un V dont l'ouverture est orientée vers l'arrière de la caisse 5.

La présente invention ne se limite pas à l'exemple de réalisation décrit ci-dessus et peut recevoir divers aménagements et présente différents avantages parmi lesquels :
- la réalisation d'une unité de mise en conformation d'un véhicule peu encombrante, légère, peu onéreuse et adaptée pour être mise en place par des robots prévus à cet effet,
- l'utilisation des mêmes conformateurs avant pour les différents véhicules d'une même gamme,
- la fixation de la totalité des actionneurs réalisant la géométrie sur les conformateurs,
- l'accroissement de l'accessibilité de soudure à l'arrière du véhicule lorsque les conformateurs sont en place et l'accroissement de l'accessibilité au véhicule lorsque les conformateurs sont ôtés, étant donné que ces conformateurs portent les actionneurs,
- la possibilité d'assembler sur la même station les différentes pièces de la caisse (traverses avant, milieu, arrière, panneau et tablette arrière),
- la formation d'une coque rigide par les conformateurs assemblés, qui assure une faible dispersion géométrique de la caisse lors de son soudage de par l'utilisation de nos bridages.

## Revendications

1. Unité de mise en conformation géométrique (1) d'un véhicule comprenant :
- un bâti (2) prévu pour recevoir la caisse (5) du véhicule,
- deux paires de conformateurs ((12, 14), (13, 15)) prévues pour se fixer sur le bâti (2) symétriquement par rapport au plan de symétrie du véhicule, chaque conformateur (12, 14, 13, 15) comprenant des moyens de maintien (16, 17) prévus pour maintenir la partie de la caisse (7, 8, 9, 10) en vis-à-vis de laquelle ledit conformateur (12, 13, 14, 15) est fixé, chaque paire de conformateurs ((12, 14), (13, 15)) comprenant un conformateur avant (12, 13) maintenant la partie avant de la caisse (5) et un conformateur arrière (14, 15) maintenant la partie arrière de la caisse (5), lesdits conformateurs ((12, 14), (13, 15)) créant une coque rigide à l'intérieur de laquelle la caisse 5 est maintenue,
**caractérisé en ce que** chaque conformateur (12, 13, 14, 15) comprend une première partie qui s'étend verticalement à partir du bâti (2) et une deuxième partie qui s'étend horizontalement au-dessus de la caisse (5) depuis la première partie et en direction du plan de symétrie du véhicule.

2. Unité de mise en conformation géométrique selon la revendication 1, **caractérisée en ce qu'**elle comprend des moyens de verrouillage (19) prévus pour verrouiller entre elles les deuxièmes parties des conformateurs avant (12, 13), des moyens de verrouillage (19) prévus pour verrouiller entre elles les deuxièmes parties des conformateurs arrières (14, 15), et/ou des moyens de verrouillage prévus pour verrouiller les conformateurs sur le bâti.

3. Unité de mise en conformation géométrique selon l'une des revendications 1 ou 2, **caractérisée en ce que** les conformateurs arrières (14, 15) sont conformés pour laisser libre l'accès à l'arrière de la caisse (5).

4. Unité de mise en conformation géométrique selon l'une des revendications 1 à 3, **caractérisée en ce que** chaque conformateur (12, 14, 13, 15) comprend des changeurs d'outil automatiques aptes à faciliter la préhension de ce conformateur (12, 14, 13, 15) par un robot de manutention.

## Claims

1. A geometrical conformation unit (1) for a vehicle comprising:
- a frame (2) for receiving the vehicle body (5),
- two pairs of conformers ((12, 14), (13, 15)) to be attached on the frame (2) symmetrically in relation to the plane of symmetry of the vehicle, each conformer (12, 14, 13, 15) comprising holding means (16, 17) for holding the portion of the body (7, 8, 9, 10) opposite which said conformer (12, 13, 14, 15) is attached, each pair of conformers ((12, 14), (13, 15)) comprising a front conformer (12, 13) holding the front portion of the body (5) and a rear conformer (14, 15) holding the rear portion of the body (5), said conformers ((12, 14), (13, 15)) creating a rigid shell inside of which the body 5 is held, **characterised in that** each conformer (12, 13, 14, 15) comprises a first portion extending vertically from the frame (2) and a second portion extending horizontally above the body (5) from the first portion in the direction of the plane of symmetry of the vehicle.

2. A geometrical conformation unit according to claim 1, **characterised in that** it comprises locking means (19) for locking the second portions of the front conformers (12, 13) together, locking means (19) for locking the second portions of the rear conformers (14, 15), and/or locking means for locking the conformers on the frame.

3. A geometrical conformation unit according to any one of claims 1 or 2, **characterised in that** the rear conformers (14, 15) are conformed to leave the access at the rear of the body (5) clear.

4. A geometrical conformation unit according to any one of claims 1 to 3, **characterised in that** each conformer (12, 14, 13, 15) comprises automatic tool changers suitable for facilitating the gripping of said conformer (12, 14, 13, 15) by a handling robot.

## Patentansprüche

1. Einheit zur geometrischen Formung (1) eines Fahrzeuges, umfassend:
- ein Gestell (2), das zum Aufnehmen des Aufbaus (5) des Fahrzeuges vorgesehen ist,
- zwei Formgeberpaare ((12, 14), (13, 15)), die vorgesehen sind, um in Bezug auf die Symmetrieebene des Fahrzeuges symmetrisch am Gestell (2) befestigt zu werden, wobei jeder Formgeber (12, 14, 13, 15) Haltemittel (16, 17) umfasst, die vorgesehen sind, um jenen Teil des Aufbaus (7, 8, 9, 10) zu halten, dem gegenüber der Formgeber (12, 13, 14, 15) befestigt ist, wobei jedes Formgeberpaar ((12, 14), (13, 15)) einen vorderen Formgeber (12, 13), der den vorderen Teil des Aufbaus (5) hält, und einen hinteren Formgeber (14, 15) umfasst, der den hinteren Teil des Aufbaus (5) hält, wobei die Formgeber ((12, 14), (13, 15)) eine starre Schale bilden, innerhalb derer der Aufbau (5) gehalten wird,
**dadurch gekennzeichnet, dass** jeder Formgeber (12, 13, 14, 15) einen ersten Teil, der sich ausgehend vom Gestell (2) senkrecht erstreckt, und einen zweiten Teil umfasst, der sich waagrecht über dem Aufbau (5) ausgehend vom ersten Teil und in Richtung der Symmetrieebene des Fahrzeuges erstreckt.

2. Einheit zur geometrischen Formung nach Anspruch 1, **dadurch gekennzeichnet, dass** sie Verriegelungsmittel (19), die vorgesehen sind, um die zweiten Teile der vorderen Formgeber (12, 13) untereinander zu verriegeln, Verriegelungsmittel (19), die vorgesehen sind, um die zweiten Teile der hinteren Formgeber (14, 15) untereinander zu verriegeln, und/oder Verriegelungsmittel umfasst, die zum Verriegeln der Formgeber auf dem Gestell vorgesehen sind.

3. Einheit zur geometrischen Formung nach einem der Ansprüche 1 oder 2, **dadurch gekennzeichnet, dass** die hinteren Formgeber (14, 15) so ausgebildet sind, dass sie freien Zugang zum hinteren Bereich des Aufbaus (5) gewähren.

4. Einheit zur geometrischen Formung nach einem der Ansprüche 1 bis 3, **dadurch gekennzeichnet, dass** jeder Formgeber (12, 14, 13, 15) automatische Werkzeugwechsler umfasst, die imstande sind, das Greifen dieses Formgebers (12, 14, 13, 15) durch einen Handlingroboter zu vereinfachen.
